# EUROPEAN PATENT APPLICATION

(11) **EP 1 526 702 A1**
(43) Date of publication of application: **27.04.2005**
(21) Application number: 03024253.1
(22) Date of filing: 22.10.2003
(51) Int. Cl.: H04L 29/12, H04L 29/08

(54) **Method and apparatus for managing information exchanges between communicating entities, e.g. apparatus on a worksite**

(71) Applicant: Leica Geosystems AG, 9435 Heerbrugg (CH)
(72) Inventor: Woon, Clement, 9435 Heerbrugg (CH); Marx, Bernhard, 55471 Kümbdchen (DE); Stegmaier, Peter, Dr., 8707 Uetikon a/S (CH); Schneider, Klaus, Dr., 6850 Dornbirn (AT)
(74) Representative: Kaminski, Susanne, Dr.

(57) **Abstract**

In a method of managing operations in an outdoor worksite through exchanges of data between items of apparatus operating on the site, the operations are initiated from a work-plan, and assigned to said items of apparatus organized in at least one level of sub-class with respect to the level of the work plan. Said exchanges of data are effected over a communications network operative on the worksite, each item of apparatus being allocated to a specific communicating entity through which it can access the network. It further comprises providing each communicating entity with an address conforming to a standardized protocol, especially the internet IP protocol, which allows direct exchanges over the network substantially seamlessly between addressee and addressor communicating entities, independently of their respective levels of sub-class. The address attributed to a communicating entity prefereably reflects is level/sub-level.

## Description

The invention relates to the field of information exchange management, where the communicating entities can be e.g. fixed and/or mobile apparatus on an outdoor worksite, e.g. for civil engineering construction, landscaping, roadbuilding, local geography modification, mining, etc.

Such management can nowadays be automated to a large extent through specific computer tools and remotely controlled earth moving units. The automation calls for an efficient exchange of information at all levels, both on and off the site whenever possible in real-time.

Typically, the information flow is relayed through one or more management points. For instance, three-dimensional site models can be generated and updated at an off-site source and sent as site strategic or operative information to an on-site office serving as a local management centre. In response, the latter derives and manages site operative information and instructions for the automated machinery and man-machine interfaces, and reports back to the off-site source.

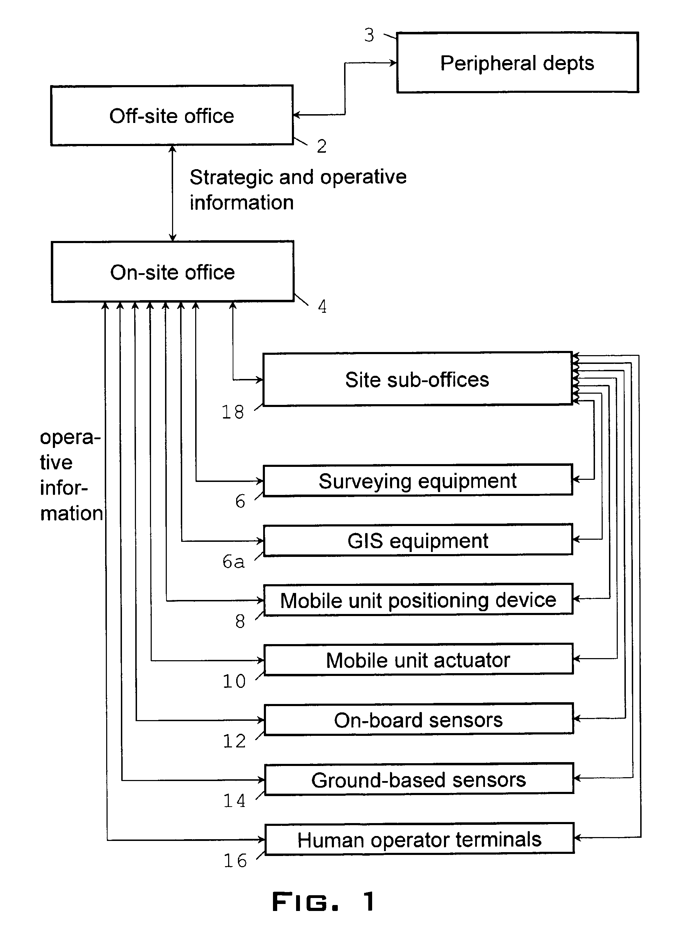

Figure 1 illustrates in block diagram form some possible data exchange points used in the management of a worksite.

The off-site office 2 constitutes the main centre for site strategic and operative information exchange, possibly in conjunction with one or several peripheral departments 3 or sub-contractor off-site offices. This high-level information is exchanged with the worksite via a main on-site office 4, which serves as a centralized relay point. Multiple on-site offices are possible. The on-site office further operates as a management centre for personnel and equipment on the site, with which it exchanges operative information. In the example, the main on-site office exchanges data with :
- surveying equipment 6, specifically dedicated to geometrical data acquisition, e.g. theodolites, laser rangefinders, etc.,
- equipment for assessment of geographical information (GIS) as locations of special objects and their properties,
- mobile unit positioning devices 8, e.g. GPS receivers, to determine the instant position of mobile apparatus such as excavators, bulldozers, trucks, cranes, etc.,
- mobile unit actuators or servos 10, generally through radio-controlled on-board units which command the machinery, either for its displacement along the worksite (propulsion motors) or for actuating a tool, such as a bucket, pneumatic drill, ram, blade, etc.,
- on-board sensors 12, for instance to determine the unit's operating parameters, such as fuel level, engine temperature, totalized operating time, idle time, load time, wear indicators, etc.,
- ground-based sensors 14, for instance GPS reference stations or apparatus to determine local temperature, humidity, soil characteristics, etc., and
- human operator terminals 16, i.e. man-machine interfaces such as control panels, monitors, etc. which may be carried or fixed.

At least some of the above devices can exchange data via one or more fixed site sub-offices 18 which form fixed hubs, e.g. allocated to a particular part of the site, or a specific type of data/machinery.

In addition to the above physical system management, the central off-site office 4 also manages some administrative tasks at a local level, for instance regarding personnel, progress reports, scheduling of tasks and resources, contacts with local authorities, sub-contractors, material flow, etc. These tasks are performed with computer programs such as spreadsheets, databases, specific Software, etc. which are routinely exchanged and updated with the off-site office 2.

In the context of road construction, there has been proposed an open system for road information support known under the name "Osyris", details of which can be accessed from the Internet site http://www.unikarlsruhe.de/∼gm03/ae_osyris_base_for_article.doc and http://www.osyris.org. The aim of this system is to enable contractors and road owners to create their own knowledge bases and quality assurance systems operative over different stages of the road's production and life cycle.

In one disclosed application of the Osyris system, an on-board computer collects data from sensors via a field bus according to a Control Area Network (CAN) and positioning data e.g. from a GPS device. This information is then relayed by radio transmission to an office via a wireless transmission format. At the office, the data has to undergo a transformation before being entered into a database which serves a central information point accessible by different levels of the hierarchy of apparatus.

While this prior art system goes some way towards rationalizing the data flow, there remains a need to for communications system which allows fully autonomous communication at all levels, with seamless access to the different communicating entities.

For instance, the different entities 6-16 mentioned above should ideally also be able to communicate among themselves directly, rather than via the on-site central office or a sub-office 18, to allow for a more natural, decentralized, management of information flow. It would also be of advantage if the same communications protocol can be used for all the communicating entities.

More generally, there is a need for a communication system that allows the hierarchical data exchange structure to be made as flexible as possible, enabling apparatus to communicate with other apparatus without restriction on their respective levels of hierarchy.
In view of the foregoing, the present invention provides, according to a first aspect, a method of managing operations in an outdoor worksite through exchanges of data between items of apparatus operating on the site, the operations being initiated from a work-plan, and assigned to said items of apparatus organized in at least one level of sub-class with respect to the level of the work plan, wherein said exchanges of data are effected over a communications network operative on the worksite, each item of apparatus being allocated to a specific communicating entity through which it can access the network, which is characterised in that it further comprises providing each communicating entity with an address conforming to a standardized protocol which allows direct exchanges over the network substantially seamlessly between addressee and addressor communicating entities, independently of their respective levels of sub-class.

Preferred embodiments of the present invention are defined in the dependent claims.

The invention and its advantages shall become more apparent from reading the following description of the preferred embodiments, given purely as nonlimiting examples, with reference to the appended drawings in which:
- figure 1, already described, is a simplified block diagram illustrating the different types of communicating entities typically present in an automated civil engineering site,
- figure 2, is a conceptual diagram of a part of a worksite in which a road is being built, showing the different networked communications links available for the exchange of data and which can be used in accordance with the invention,
- figure 3 is a block diagram showing functional units involved in commanding actuators of a bulldozer and sending out sensor data through IP (Internet Protocol) messages in the worksite communication system according to figure 2,
- figure 4, analogous to figure 1, is a simplified block diagram illustrating the different types of communicating entities typically present in an automated civil engineering site, additionally showing the allocation of IP addresses,
- figure 5 is a block diagram showing an example of sub-levels in the IP addressing scheme illustrated in figure 4,
- figure 6 is a simplified diagram showing how a worksite terrain model file is prepared and transferred to an on-site office for action, using IP messaging,
- figure 7 is a diagram showing the steps, performed by the on-site office, in the allocation of specific commands to on-site communicating entities in response to data extracted from the worksite terrain model file,
- figure 8 is a diagram showing how IP messages are selectively relayed by intervening communicating entities within the worksite, between an addressor and addressee,
- figure 9 is a flow chart showing the steps involved in creating an updated position table for each active communicating entity of the worksite, according to one embodiment, and
- figure 10 is a flow chart showing how a communicating entity determines whether or not to relay a message it has received.

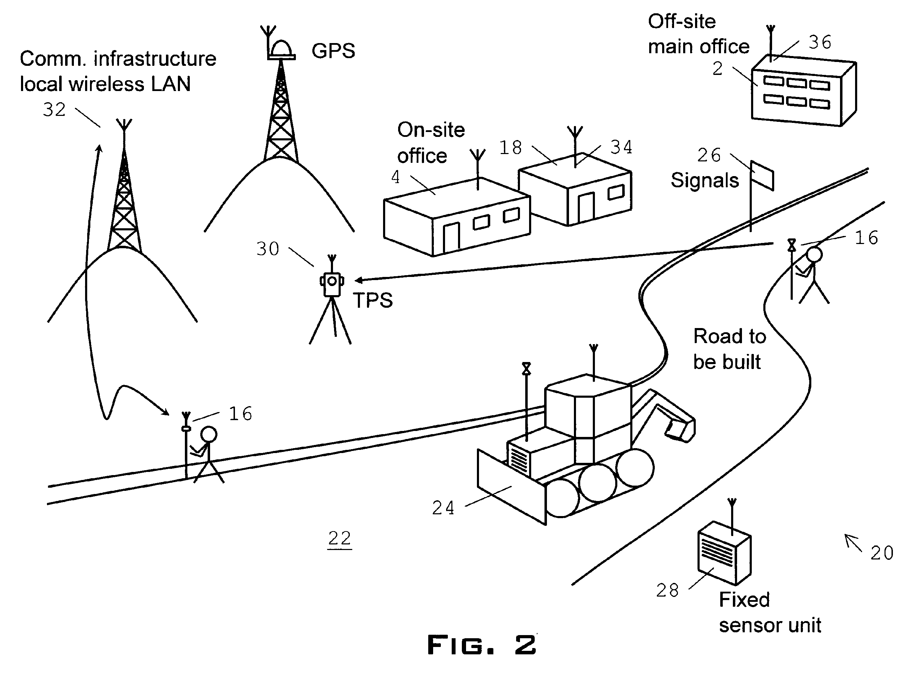

The example of the worksite 20 illustrated in figure 2 serves to show some of the communications means available between the different communicating entities operating on a civil engineering worksite. The latter can include some or all of the entities 2 to 18 described above with reference to figure 1, as well as others depending on requirements.

The part of the worksite 20 illustrated concerns the construction of a road 22, and hence involves a change in the local geography by modification of the local contour.

As explained in the introductory portion, the on-site office 18 ensures the general local management of the worksite. In the example, this is broken down into three classes of tasks:
- monitoring of the construction site and exception handling,
- management of resources, work assignment, scheduling, etc.,
- integration of design, surveying, geographical, and progress information.

The on-site office manages both human and machine resources. The former include engineering and technical personnel equipped with terminals 16 through which they can enter or monitor data. These terminals are linked to portable equipment such as surveying apparatus, positioning devices, sensors, etc. An example of a portable interfacing equipment is the laser rangefinder terrestrial positioning system (TPS) produced by Leica Geosystems, a description of which can be found at the web address http://www.leicageosystems.com/surveying/product/totalstations/tcr300.htm.

The machine resources comprise:
- mobile geography altering unit, such as a bulldozer 24, equipped with earth-moving tools. The mobile units can be fully automated both with regard to their displacement along the worksite and to the operation of their tools; and
- static apparatus, such as floodlights, signaling lights 26, e.g. for personnel or the public, fixed sensor units 28, e.g. for atmospheric conditions, noise levels, etc, laser markers, wireless transmission relay units, etc.

In the example, the wireless transmission relay units comprise:
- a main radio mast 32 forming part of a communication infrastructure for a wireless local area network,
- a wireless data hub 34 at the on-site office 4,
- a wireless data communication terminal 36 at the level of the main office 2, and
- some or all of the communicating entities on the worksite, these being assigned the additional role of relaying stations to constitute a dynamic wireless network, as shall be explained in more detail further. Indeed, each item or cluster of items of the machine resources (hereafter referred to as a communicating entity CE) is also equipped with communicating devices which use the wireless communication infrastructure.

Communication, at all levels, uses the Internet protocol (IP). This is achieved by attributing each communicating entity with its own IP address, through which it is identified and accessible.

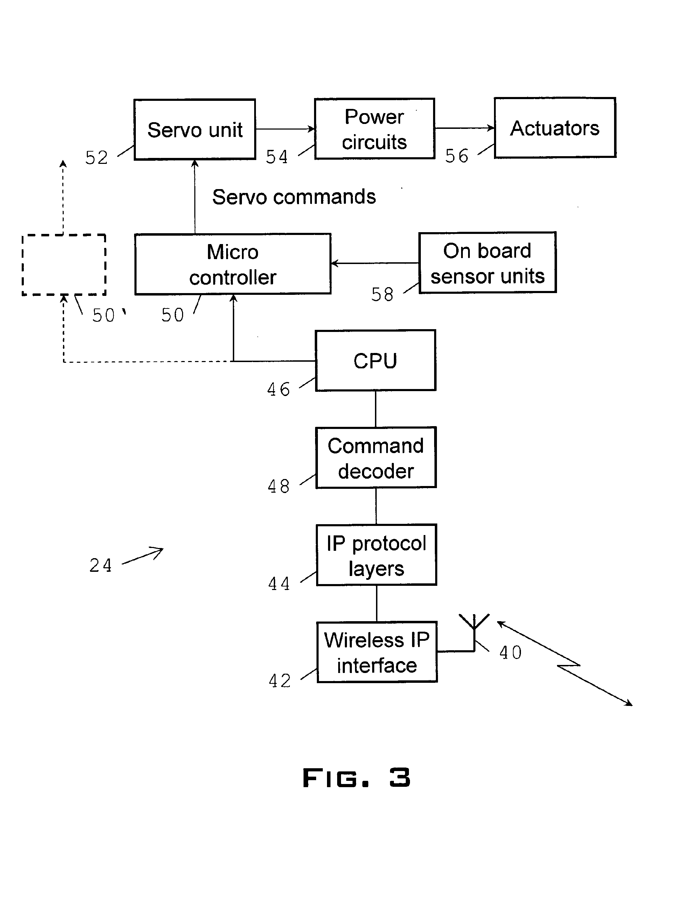

For instance, figure 3 illustrates the main functional elements on board a powered apparatus, such as a bulldozer 24 for exchanging such IP commands. In the example, the commands are directed to a servo unit that commands actuators, such as the rams for the mechanical shovel.

The powered apparatus is equipped with an antenna 40 connected to an on-board wireless IP interface unit 42 comprising the radio and base band layers for effecting a two-way radio link with other communicating entities on the site. The wireless IP interface 42 communicates internally through a firmware unit 44 containing the necessary IP protocol layers for formatting ingoing and outgoing messages. The messages are interfaced by the apparatus' command CPU 46 through a command decoder unit 48 using standard techniques.

The CPU communicates with at least one dedicated microcontroller unit 50 which is specifically adapted to handle low-level commands to the actuator under its control, e.g. the hydraulic ram drives. The microcontroller thus sends servo commands to a servo unit 52, which controls the required power circuits 54 for driving the actuators 56. Further microcontroller units 50' and the respective subunits are indicated in Fig. 3 by means of dotted lines.

The microcontroller 50 also manages feedback data from local sensor units 58 associated with the actuators, power circuits or servo unit, e.g. hydraulic pressure sensors, strain gauges, etc.

The IP protocol layers 44 and wireless interface 42 together enable the apparatus to communicate with the outside as a web server. To this end, they include all the protocol layers required to constitute an autonomous server with a specific IP address.

The web server can be centralized for all tasks concerning the bulldozer, in which case all ingoing and outgoing messages are routed through the latter. Alternatively, the management within the bulldozer can be decentralized to one or more sub-levels of hierarchy, each allocated with its own web server. For instance, the microcontroller 50 associated to the actuator servo unit 52 can have its own wireless IP interface, IP protocol layers and command decoder for communicating directly with the other communicating entities on the worksite. In this way, commands pertinent only to the actuator servos can be handled directly at that sub-level through IP formatted messages, without having to call upon other communication and IP resources of the bulldozer. The universal use of the same messaging protocol, in this example the IP protocol, irrespective of the level of communicating entities, allows complete freedom for cross-communication among two or more communicating entities, without having to obey hierarchical rules.

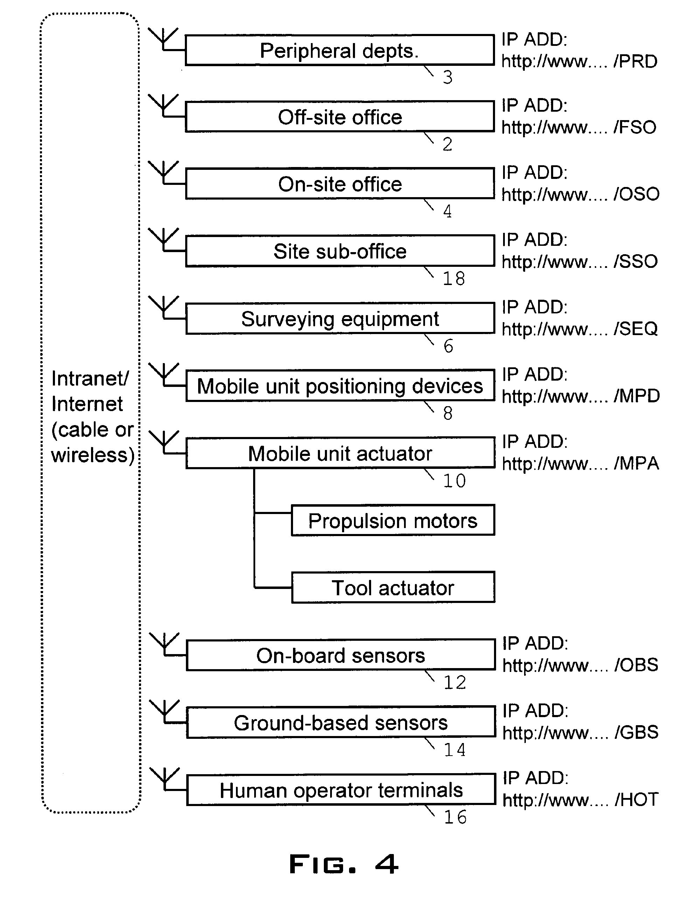

Figure 4 illustrates an example of IP address attribution for the communicating entities of figure 1. In this example, each entity is assigned an address having the format, such as : http://www.worksiteXXX.com forming the common generic prefix for all communicating entities accessible. Other forms of addresses, not necessarily URLs, can be used using various addressing conventions. This generic prefix is followed by one or more suffix(es), each separated by a "/". A first suffix designates a class of communicating entity, and additional suffixes designates respective levels of sub-classes. In the figure, the class suffixes in the IP address scheme is as follows:
- off-site office 2: IP address class suffix = "FSO",
- peripheral departments 4: IP address class suffix = "PRD",
- on site Office 3: IP address class suffix = "OSO",
- surveying equipment 6: IP address class suffix = "SEQ",
- mobile unit positioning devices 8: IP address class suffix = "MPD",
- mobile unit actuators 10: IP address class suffix = "MPA",
- on-board sensors 12: IP address class suffix = "OBS",
- ground-based sensors 14: IP address class suffix = "GBS",
- human operator terminals 16: IP address class suffix = "HOT",
- site sub-office 18: IP address class suffix = "SSO".

Generally, the generic class suffix serves to distinguish classes of communicating entities.

The sub-class identifiers are then attached to that class suffix according to a hierarchical or tree structure, each prefix being separated by a "/".

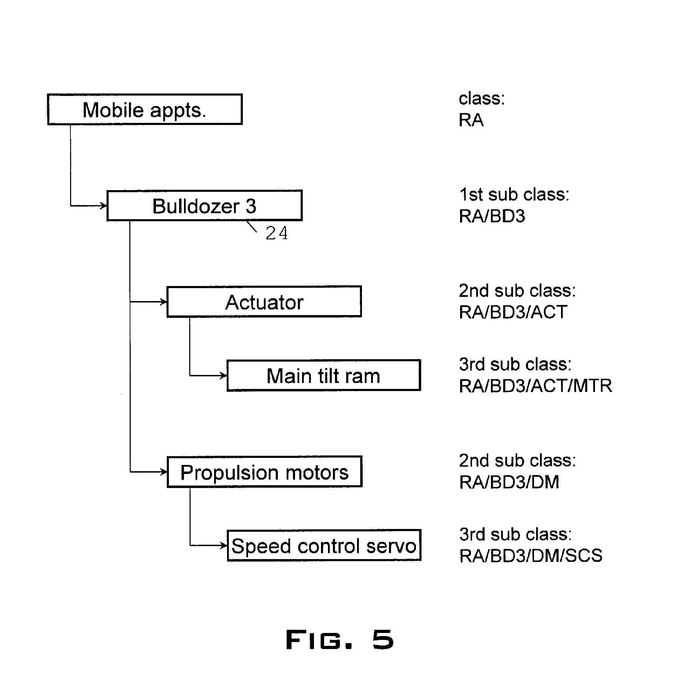

For instance, figure 5 illustrates the case where the communicating entity is the mobile apparatus of figure 3. As such, its IP server address will have the class suffix "RA", common to all mobile apparatus on the site.

The hierarchy provides for a first sub-class according to the type of mobile of mobile apparatus, each type being identified by a group of characters, for instance: "TT" for tipper truck, "BD" for bulldozer, "MS" for mechanical shovel, etc.

Accordingly, all bulldozers will have an address containing "RA/BD... ". Each mobile apparatus of a particular type is attributed a unique identification number N (N=1, 2, 3, ....) which is attached immediately after its type identification. Thus, if the bulldozer in question is attributed the number "3", it can be uniquely addressed in the IP addressing scheme with the form "RA/BD3/...

A second sub-class serves to identify the different groups under the central command of a specific bulldozer. These groups thus each represent highest level of hierarchy under the command of the CPU 46. Typically, the groups centralise main groups of functions of the bulldozer: the command of actuators, command of main drive motor for propulsion, etc. Each sub-class is likewise identified by a group of characters, and can be accessed by inserting its corresponding group of characters immediately after the character group of its next level up in the hierarchy.

Following the same scheme, an arbitrary number of sub-class levels can be added, each one going down one level deeper in the hierarchy.

The example of figure 5 shows a case where three levels of sub-class are used. Specifically, the bulldozer itself with its unique identification constitutes the first sub-class of mobile apparatus (RA/BD3...). There are shown two sub-classes, respectively for the group of actuators (identified by "ACT") and the propulsion drive motor (identified by "DM"). In this way, a communication can be established with the main actuator command centre of bulldozer 3 by using the address portion "RA/BD3/ACT", for instance.

The propulsion motor command group is divided into a number of sub-command structures, each allocated to a specific set of tasks and directly accessible as a communicating entity. To this end, these sub-command structures constitute a third level of sub-class. The example shows how a drive motor speed control servo unit (identified by "SCS") is made accessible as a third level sub-class with the address portion "RA/DB3/DM/SCS".

Being incorporated into the prefix of the general address for the worksite in question, and which will typically have an Internet address format of the type "httt:/www.worksiteXXX.com/", each communicating entity, irrespective of its hierarchical level, can enter into communication with the speed control servo command unit of bulldozer 3, say, simply by producing the latter's internet or intranet address: "httt:/www.worksiteXXX.com/ RA/DB3/DM/SCS".

Once that addressee has been accessed, a communication channel is established between the latter and the addressor, the latter being e.g. a remote traffic control unit for the worksite.

The exchange of data can be bidirectional, with the addressor communicating its own address to the addressee, following the normal rules of the IP protocol. The exchanged messages (commands, data, etc.) constitute the payload of the data packets exchanged. As such, the internal structure of the exchanged messages can be adapted to any protocol as required, for instance adapted to the level of interfacing of the recipient, and is thus independent of the IP protocol.

The scheme thereby allows any communicating entity, both on and off the worksite, to access any other entity through a unique Internet address of the latter, using the hierarchical address structure.

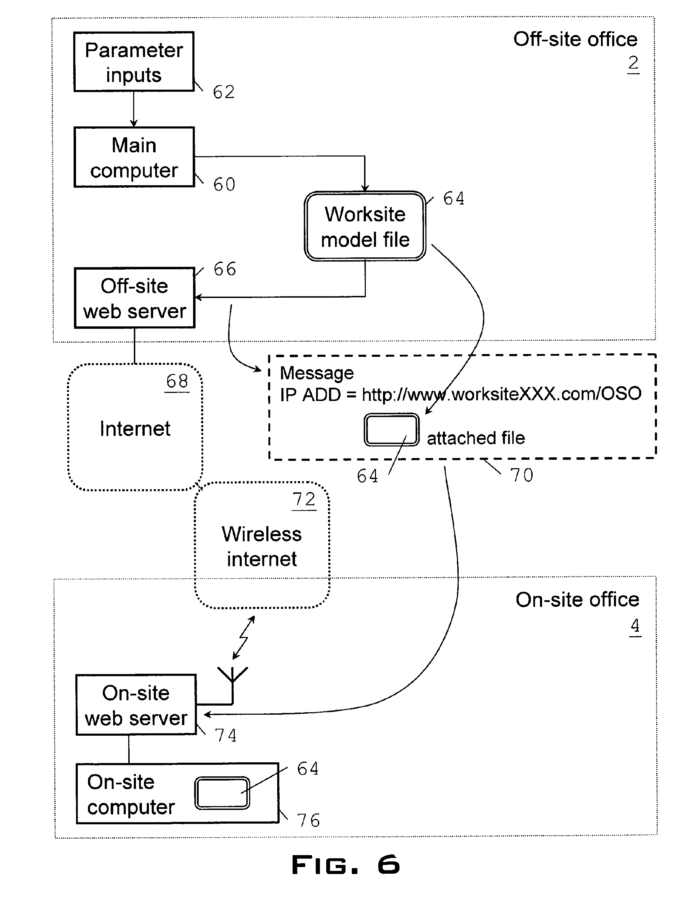

Figure 6 shows how the IP platform is used for a transfer of information from the off-site 2 to the on-site office 4. In the example, the information is a three-dimensional terrain model of the worksite to be achieved, as produced by the main computer 60 according to selected parameter inputs 62. The model is produced in the form of a computer data file 64 formatted to be readable by a computer at the on-site office 4. It is transferred internally to a web server 66 of the off-site office, connected to the Internet 68 through a telephone cable. The server encloses the model file in a standard IP format message 70 addressed to the on-site office, i.e. with the address " httt:/www.worksiteXXX.com/OSO", and sends it through the Internet 68. The message 70 is distributed to the on-site office 4 via a wireless Internet 72 linked with the Internet.

Upon receipt, the message 70 is automatically processed by the on-site web server 74 of the on-site office 4, from which the work-site model file 64 is extracted and sent internally to the on-site computer 76. It may be advantagous to equip the server 74 with a firewall function.

The computer can thereby update its current model, e.g. to incorporate changes to original plans, or new scheduling prerogatives.

The model serves as a basis for establishing the work plan at different levels. The main task of the on-site office is to identify tasks to be performed in order to reproduce in reality the contour information expressed by the model.

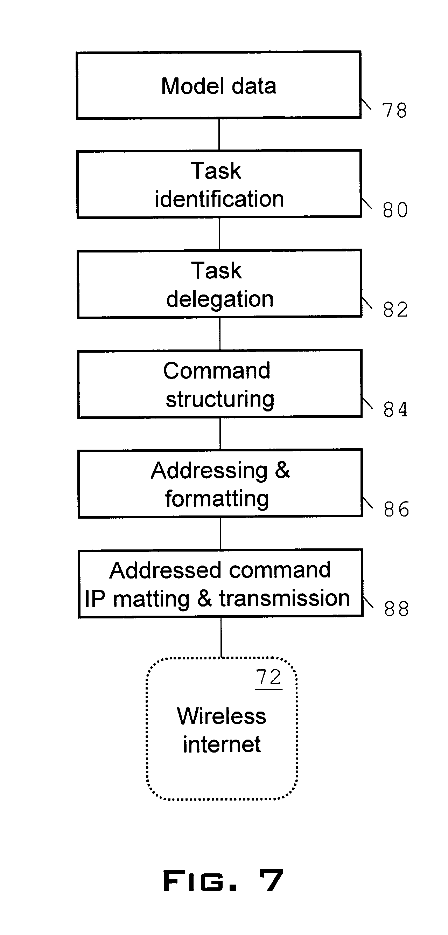

Figure 7 illustrates the tasks in producing specific addressed commands from the model data 78 extracted from the model file 64. The data are analysed to determine general characteristics of the work to carried out, e.g. quantities of earth to be moved per grid element, changes in level, order of work, etc.

From that high-level data, a task identification procedure 80 is activated, in which more specific tasks are identified, such as the number and type of mobile apparatus to bring into action, tools to be fitted etc. These tasks in turn each give rise to sub-tasks, e.g. commands to actuators, propulsion motors, etc.

The thus-identified tasks are then submitted to a task delegation procedure 82, in which they are attributed individually to the specific physical apparatus or groups of apparatus.

The delegation thus involves converting the delegated tasks into commands which will produce those tasks when executed. This involves command structuring 84, in which commands are adapted to a format intelligible by the apparatus to which it is intended.

Next, the structured commands are attributed the address of the communicating entity expressed in the format of the apparatus to which they are intended, through an addressing and formatting procedure 86. The latter thus generates the suffixes following the hierarchical structure as required to access the addressee, using the scheme illustrated in figure 5.

The thus-formatted commands are entered as payload in an IP format message sent to the attributed address of the apparatus concerned, and sent to the wireless Internet 72, through an IP transmission procedure 88 using the web server.

It will be noted that the on-site office has total flexibility to address commands of different levels directly to the corresponding level of hierarchy of the communicating entities, and can thereby determine the delegation of work essentially solely on efficiency criteria. In other words, its communication is not bound to a specific level of the hierarchy.

The wireless LAN used for conveying the IP messages over the worksite uses the main transmission mast 32, generally situated in proximity to the on-site office 18 (figure 2) for optimum communication conditions between the latter and both the off-site office and nearby communicating entities in the worksite. However, a worksite may cover a large area, or extend over a long distance, e.g. in the case of road building. Moreover, the site may comprise tunnels, metallic structures, etc. which can attenuate radio transmissions.

To ensure optimum communication conditions even under those conditions, the preferred embodiment provides that some at least of the communicating entities additionally serve a message relaying stations. These relaying stations are effectively organized as nodes or hubs in the wireless communication network, each receiving data packets and re-sending them to either the end destination or to another relaying further along the path.

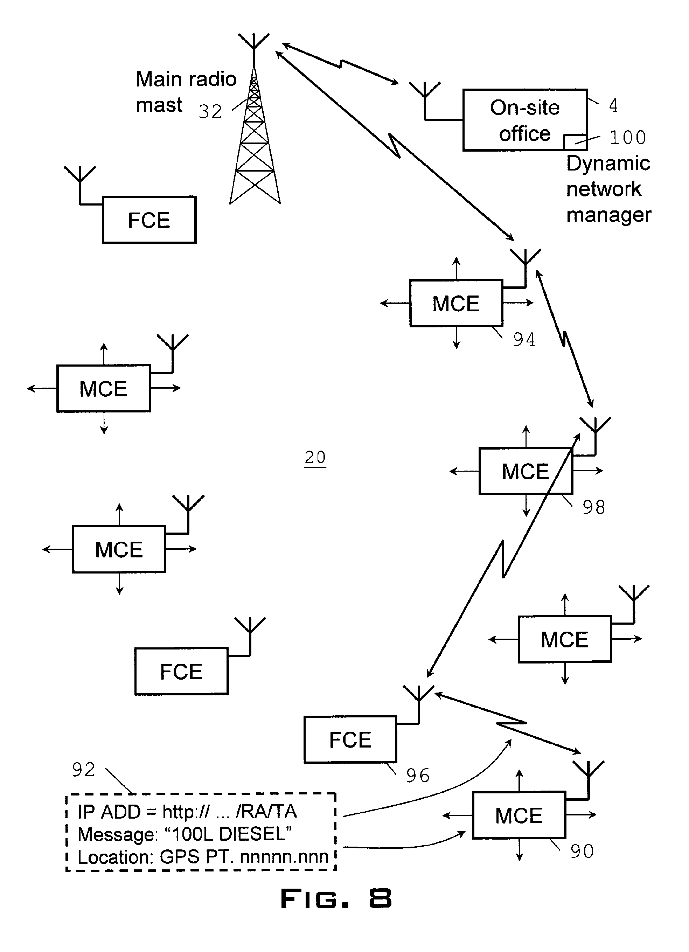

Figure 8 illustrates schematically the concept of using communicating entities as relaying stations. In the example, the latter constituted by:
- fixed communicating entities, designated FCE, such as ground-based sensor stations, TPS units 30, signaling towers 26, cement silos, fixed cranes, etc.; and
- mobile communicating entities, designated MCE, such as mobile earth moving apparatus (bulldozers 24, tipper trucks, mechanical shovels, mobile terminals, etc.

Typically, the on-site office would have a large communication range, assisted by the main radio mast 32, covering all but the remotest or heavily shielded communicating entities.

On the other hand, by virtue of their additional relaying roles, the communicating entities themselves need not have a large range, so reducing power consumption and costs.

The operation of the messaging relaying network is illustrated by the following example. A Bulldozer 90 (MCE) needs to be refueled, as detected by its on-board sensors. Its onboard computer automatically prepares a standardized IP format message 92 requesting a fuel fill.

The request message 92 comprises three main fields:
- the addressee, which is a tanker truck 94. Accordingly, the address format shall include "../RA/TA", where "TA" defines the sub-class of mobile apparatus RA attributed to tanker trucks;
- the message content, set according a predetermined form intelligible by the tanker's on-onboard computer, indicating the requirement, e.g. "100L DIESEL" for 100 litres of Diesel oil, and
- the current location of the Bulldozer, in terms of GPS grid coordinate data, acquired through an on-board GPS receiver.

The message shall be prepared and sent from the IP server layer on board the Bulldozer through the wireless radio network.

If the tanker truck 94 is out of range for a direct radio link, it will nevertheless reach its destination by being relayed by one or more intervening communicating entities on the site. In the example, the message is first detected and intercepted by a first intervening communicating entity 96, which is of the fixed type. From there it is sent to a second communicating entity 98, which is of the mobile type, and from the latter to the fuel tanker 94.

Upon receipt of the message 92, the tanker's on-board computer shall extract the message content and read the GPS coordinates to determine the location of its sender. With that information, it will be able to determine automatically a road path leading to the Bulldozer, and thereby effect the refueling.

It will appreciated that the refueling task in the above example was handled entirely at a sub-level in the hierarchical structure, i.e. between communicating entities consisting of two mobile apparatus (Bulldozer and tanker truck), without calling upon management resources at the next highest level of hierarchy, namely the on-site office. However, the site office can be informed for monitoring and scheduling purposes.

More generally, all tasks involving one level of sub-class or lower in the hierarchy (cf. figure 5) are handled directly at that level, without calling upon the resources of the a higher degree of sub-class.

This can be illustrated by the following additional example. The displacement speed of a truck has to be adjusted according to the ground and climatic conditions. The latter are determined locally by ground based sensors 28 which generically belong to a first level of communicating entities in the hierarchy. Ground based sensors of the climatic type belong to a second level (generically covering temperature sensors, wind speed sensors, rain sensors, etc.), and the specific instance of sensors being able to detect potential icing conditions belongs to a third level in the hierarchy. An IP address of an icing sensor bearing the identification number 28 may be for instance http://worksiteXXX.com/SEN/CLIM/ICE28, where "SEN", "CLIM" and "ICE" are respectively used to identify the general ground-based sensor sub-class, the climatic sensor sub-class and the icing condition sub-class respectively. The icing sensor may be programmed to issue warning messages when the temperatures falls below a defined limit, e.g. 4°C, or critical combinations of low temperatures and wind speeds occur. The messages are specifically addressed only to communicating entities concerned, including propulsion motor servo control units of any mobile apparatus within a certain range, as determined from their GPS coordinates. The message will then contain one or several addressees, including the following address: http://worksiteXXX.com/RA/*/PM/SCS, where the symbol "*" corresponds to a wildcard. As can be followed from figure 5, the address will therefore concern the class of all mobile apparatus (RA), no matter what type (wildcard for first sub-class), and specifically to the speed control servo (SCS) associated to the propulsion motor (PM).

In this way, if the propulsion motor is decentralized from the other parts of the mobile apparatus, so as to constitute its own communicating entity with a web server address, then the central command (next higher level of sub-class) of that mobile apparatus can simply ignore the not relevant message, so being relieved of data processing tasks. Indeed, the structure of the address indicates that the message is addressed specifically to the level of sub-class belonging to propulsion motors. The web server layer of the latter, forming part of its communicating entity, shall extract the contents of that message and act accordingly, e.g. by alarming the driver through the MMI or even by directly reducing the drive speed. To do this, the communicating entity of the propulsion unit passes on the message to the speed control servo, which is one level of hierarchy further down, as the latter does not possess its own web sever in this example. However, if the speed control servo does have a web server, the latter would be able to determine that it is the intended recipient of that message, by virtue of the hierarchical address format, and read its contents autonomously. In this case, the web server for the propulsion motor would not have to intervene either to receive and handle the message. In other words, the exchange of information would be performed entirely at the thir level of sub-class and - if so desired - locally informing higher level elements

Generally, any level of sub-class can call, and be accessed by, any other level, including the topmost level at the off-site office.

The embodiment provides for various security and safety measures in the communication between the entities, such as the known provision of firewalls. At a general level, it provides a secured access layer which restricts access to the communications to only the entities recognized as belonging to the worksite or having authorization to exchange data with on-site and off-site entities of the worksite and thus enables to decide who is able to use the communicating system. The secured access layer can be implemented using known techniques, examples of which are : creation of a virtual private network (VPN) which constitutes the network through which all entities communicate, data encryption, allocation of passwords, etc.

Such a measure thereby prevents accidental interferences with other outside communications that may be in the communication range of the site. It also prevents possible malevolent tampering.

An alternate known measure would be sealing off from the internet and creating a secure intranet with controlled access.

At another level, there can also be implemented security measures to limit communications between only those entities which are mutually compatible or expected to communicate. These measures can, for instance, prevent a ground-based sensor from sending data messages addressed to mobile unit that is not intended to process such data. To this end, a communicating entity with restricted communication capability can be assigned a correspondingly restricted list of possible addressees it can call, that list omitting incompatible addressees. The hierarchical addressing structure can be used to advantage in this security measure, by defining the list in terms of classes/sub-classes of communicating entities constituting authorized addressees.

While the communicating entities are autonomous as regards the compiling and sending of messages to other communicating entities, without having to pass through a centralized messaging center, the embodiment preferably provides for an overall monitoring the message traffic. The monitoring is typically conducted at the main on-site office, and serves a number of functions, including:
- identifying occurrences of overloads and failures in the communications network,
- determining an optimum network configuration according to traffic density, types of messages being sent at a given time,
- analyzing communication trends and patterns, e.g. activity of communicating entities according to their class, hierarchical level, etc. for evaluation, test and diagnostic purposes.

The results of the monitoring can be presented on screen using graphics interfaces, enabling personnel to visualize the dynamic network and data exchanges symbolically in real time.

Moreover, the IP addresses or equivalent can managed by a central system. The latter has the function of allocating the different addresses to the respective communicating entities, generating the above-mentioned restricted lists, updating addresses, generating new categories or sub-classes according to evolutions in the apparatus used in the worksite, etc.

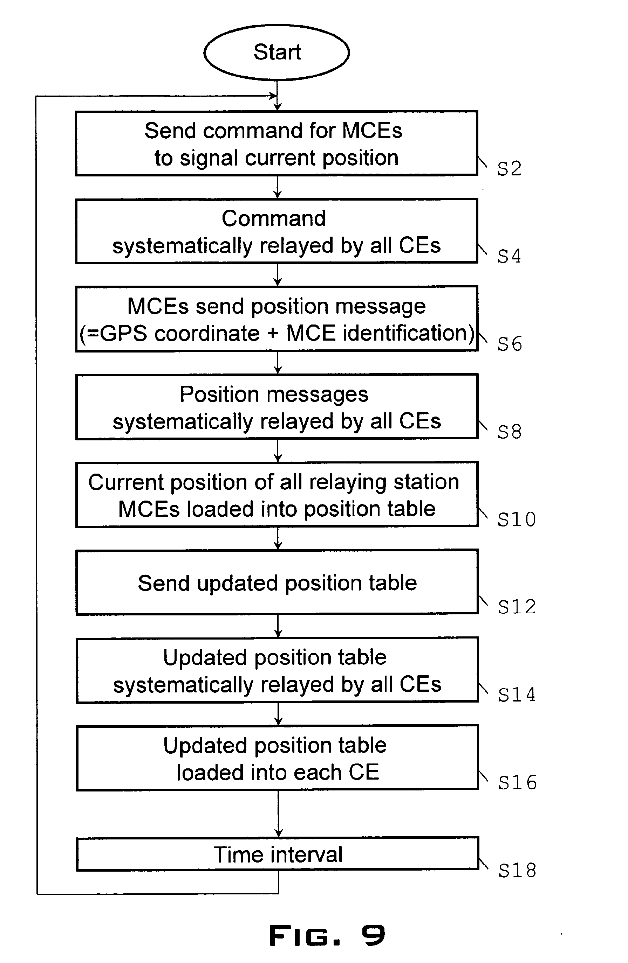

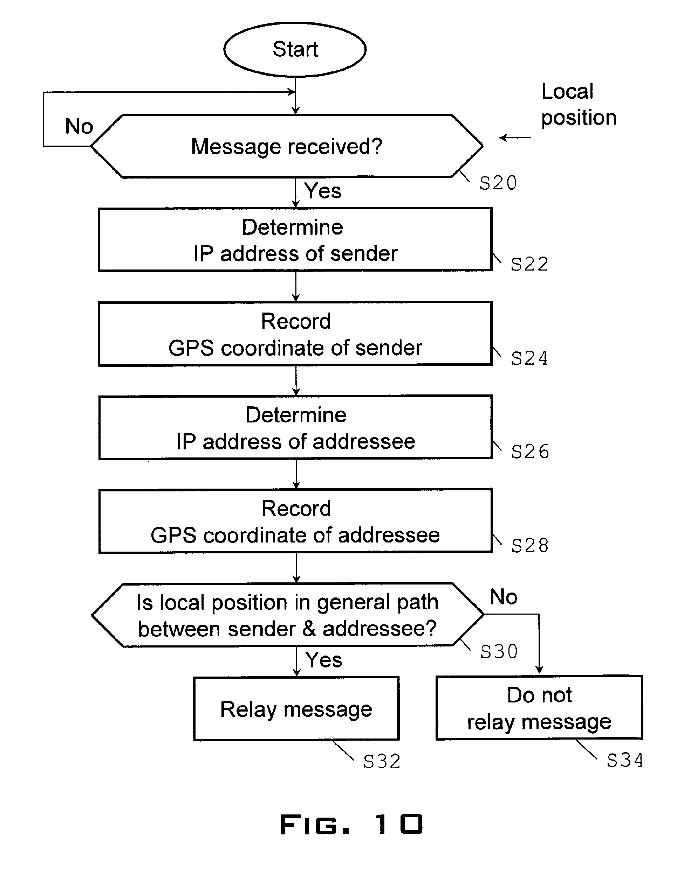

Advantageously, the relay points 96 and 98 are managed as in a cellular telephone network, whereby only intervening communicating entities along the most direct path connecting the end communicating entities 90 and 94 are activated. This can be achieved in a variety of ways, one of which is indicated with reference to figures 9 and 10.

In the example, the overall communications managements task for establishing the network are attributed to a dynamic network manager 100 at the on-site office.

Of the mobile communicating entities, those that constitute a relay station are equipped with a GPS receiver, or equivalent positioning device, able to produce coordinate reference data. All the relay stations, whether in the form of mobile or fixed communicating entities, have a local network resource management layer. The latter contains updatable tables of the position coordinates of each of the relay stations, fixed or mobile, on the site.

At an initial phase, the dynamic network manager 100 records the GPS coordinates of all the fixed communicating entities, as obtained e.g. from a manual input during a preparation phase. These data are loaded into the position coordinate tables of each relay station.

In order to determine the current position coordinates of the relay stations in the form of mobile communicating entities, the dynamic network manager 100 performs at frequent intervals an interrogation routine, the main steps of which are shown in the flow chart of figure 9.

The routine begins with a command message sent from the main radio mast 32 requesting all mobile communicating entities serving as a relay station to send their instantaneous GPS position coordinates (step S2). Each communicating entity which receives this message is programmed to relay (i.e. resend) it systematically (step S4). In this way, it is ensured that the message reaches all the possible communicating entities susceptible of forming the communications network.

Upon receipt of the command, each mobile communicating entity sends a position message containing its GPS coordinates and its MCE identification. The latter can be its unique address.

Any communicating entity which receives such a position message systematically relays it, so ensuring that the position message shall ultimately reach the dynamic network manager 100.

Once the dynamic network manager has thus acquired all the current positions of the mobile communicating entities serving as relaying stations, it loads their corresponding coordinates into the position table (step S8). In this way, the latter is complete and up to date with the coordinate data of both the fixed and mobile communicating entities serving as relaying stations.

The dynamic network manager then sends the updated position table through the main radio mast 32 (step S12), and the table is systematically relayed by all communicating entities which receive it (step S16). At the same time, each communicating entity loads the updated position table into its own local management layer upon receipt.

In this way, each communicating entity acquires and stores the current position coordinates of all the other communicating entities, whether fixed or mobile. The table will thus comprise two confronting lists, respectively containing the IP address of each communicating unit and its corresponding GPS coordinate data.

The manager then counts a time interval of a few seconds (step S 18) and loops back to the first step of the routine (step S2) to acquire the following updated current positions of the mobile communicating entities.

Figure 10 shows a simple algorithm by which any relaying station can determine whether or not it should relay a received message from another communicating (outside the routine described above, in which relaying hast to be executed systematically).

The algorithm is performed by each relaying station upon receipt of a message. The position of the relaying station in question is referred to as the "local position". The relaying station begins by waiting for a received message (step S20). Upon receipt of a message, it analyses its format and contents to determine the address of the sender (step S22), from which it notes its GPS coordinates using its updated table (step S24). Likewise, it determines from the message the address of the addressee (step S26), and notes the GPS coordinates of the latter using the same table (step S28).

Knowing the GPS coordinates of the sender and addressee on the one hand, and its local GPS position on the other, the relaying station can apply any suitable algorithm to determine whether or not its local position is in the general path between the sender and addressee (step S30). In a very simple case, the algorithm consist in determining whether the distance separating the local position and the addressee is less than the distance separating the sender and the addressee. In the affirmative, the message is relayed (step 32), given that it shall then be transmitted from a closer position to the addressee, and hence along a path to the latter. Otherwise, the message is not relayed (step S34), as the local position is in the general opposite direction of the path. It can therefore be expected that another relaying station shall be both within range of the original message and in the general path connecting the sender and addressee to ensure the relaying in its place.

Other more complex algorithms can determine whether to relay or not on the basis of the current positions of other communicating entities, signal strength evaluation, etc. using known techniques.

By using ditigal terrain models of the site and taking the characteristics of the used frequencies in to account, sophisticated algorithms are able to determine radio coverage dynamically as a function of the available fixed and mobile comminication entities and thereby indicate areas of insufficient coverage. If required, these areas may then be covered by sending an auxiliary vehicle with its on-board MCE to a suited location taking advantage of the GPS navigation system of said vehicle and thereby granting the necessary radio coverage for operation of mobile units as Bulldozers etc.

The advantage of the selective relaying in the preferred embodiment is that it avoids useless retransmissions of messages, and thus reduces the traffic on the network and occupation of management resources.

It will be understood from the foregoing that the embodiments can play an important role in linking reality to spatial models for the automation of worksites, such as automated mines and large civil engineering projects.

It judiciously utilizes and takes advantages of new techniques in real-time systems, 3 site modeling, transparency of use (seamless communication across levels of hierarchy), multi-sensor integration, new data communications systems, and web-based information and data exchange via client-server and peer-to-peer methods.

The solution described is based on the approach where each - or at least a substantial proportion - of the apparatus involved form part of a network that is connected via wireless communications and utilizes the power of the Internet. By so doing, data from any apparatus in the off-site or on the worksite can be made available to any other device within the network.

This allows design data constructed and stored in an office system to be directly accessed by techniques such as TPS, GPS or MA devices on the worksite. Conversely, observed data within the worksite can be directly accessed by the office, whether that be an apparatus, part of the apparatus (communicating entity), site, branch or main office.

Also, the data on each communicating entity within the worksite can be accessed by any other communicating entity within the worksite or even from another worksite or location. By using the Internet or equivalent message communication systems, each communicating entity effectively becomes a web server.

The above teachings are amenable to other protocols than the IP protocol, and to other network techniques. In particular, the site can be organized and run according to a local area network (LAN) in which the communicating entities communicate with each other by remote accessing.

## Claims

1. A method of managing operations in an outdoor worksite through exchanges of data between items of apparatus operating on the site, the operations being initiated from a work-plan, and assigned to said items of apparatus organized in at least one level of sub-class with respect to the level of the work plan,
wherein said exchanges of data are effected over a communications network operative on the worksite, each item of apparatus being allocated to a specific communicating entity through which it can access the network,
**characterised in that** it further comprises providing each communicating entity with an address conforming to a standardized protocol which allows direct exchanges over the network substantially seamlessly between addressee and addressor communicating entities, independently of their respective levels of sub-class.

2. Method according to claim 1, wherein the protocol used is the Internet IP protocol.

3. Method according to claim 1 or 2, wherein the address attributed to a communicating entity reflects is level/sub-level.

4. Method according to any one of claims 1 to 3, wherein some or each communicating entity is managed as a server on the network.

5. Method according to any one of claims 1 to 4, wherein a level of sub-class is attributed to an item of apparatus according to a chain of dependency on an item of apparatus having a higher level.

6. Method according to any one of claims 1 to 5, comprising assigning a separate class/sub-class to apparatus as a function of whether they are static or mobile on the worksite.

7. Method according to claim 6, wherein at least some items of mobile apparatus are given the additional function of relaying messages they receive.

8. Method according to any one of claims 6 or 7, further comprising a step of determining a current position of items of mobile apparatus and managing the distribution of messages within the network accordingly.

9. Method according to any one of claims 1 to 8, wherein a first level class/sub-class of item of apparatus comprises mobile units, a second level of sub-class being at least one command responsive functionally within said mobile unit.

10. Method according to any one of claims 1 to 9, further comprising a step of securing communications by providing technical means for restricting access to the network only to authorized communicating entities.

11. Method according to any one of claims 1 to 10, further comprising a step of limiting the [geographical ? transmission ?] range of possible entities addressable by a given communicating entity to cover only those with which the latter is authorized to communicate.

12. Method according to any one of claims 1 to 11, further comprising the step of providing a centralized monitoring and/or management of messages exchanged over said network.

13. Method according to any one of claims 1 to 12, further comprising a step of providing a centralized management of static or dynamic address allocation to the communicating entities operating in the network.

14. Use of the method according to any one of claims 1 to 13 for managing an automated worksite in which commands are sent to contour changing apparatus and to on-board apparatus through the defined protocol, the commands being elaborated from a predetermined model.

15. Use of the method according to any one of claims 1 to 14 for managing an automated worksite in which physical and logical addressing of the communicating entities is separated with a unique ID other than the IP address i.e. permitting multiple/different IP and/or unique ID addressing.
